# EUROPEAN PATENT APPLICATION

(11) **EP 4 295 689 A1**
(43) Date of publication of application: **27.12.2023**
(21) Application number: 22756064.6
(22) Date of filing: 09.02.2022
(51) Int. Cl.: A01N 59/16, A01N 25/04, A01N 25/10, A01P 3/00, C09D 5/14, C09D 7/61, C09D 201/00

(54) **FUNGICIDE, FUNGICIDE PRODUCT, AND FUNGICIDAL COATING**

(30) Priority: 18.02.2021 JP 2021024591
(71) Applicant: Kyodo Printing Co., Ltd., Tokyo 112-8501 (JP)
(72) Inventor: KARINO, Tomomi, Tokyo 112-8501 (JP); TERADA, Akira, Tokyo 112-8501 (JP); KOBAYASHI, Fumihito, Tokyo 112-8501 (JP); SUZUKI, Kenta, Tokyo 112-8501 (JP); YAMADA, Atsushi, Yokkaichi-shi, Mie 512-0934 (JP)
(74) Representative: Ricker, Mathias
(86) International application number: PCT/JP2022/005171
(87) International publication number: WO 2022/176743

(57) **Abstract**

The present invention pertains to a fungicide that causes little environmental pollution and has excellent safety, a fungicide product having a fungicide layer containing said fungicide, and a fungicidal coating containing said fungicide, the fungicide being represented by formula (1) Ln₂ₓFe₂₍₁₋ₓ₎O₃ (in formula (1), Ln is a rare earth element selected from the group consisting of lanthanum, praseodymium, neodymium and yttrium; and x is a number that is at least 0.45 and is less than 1.00).

## Description

### FIELD

The present invention relates to an antifungal agent, an antifungal product comprising an antifungal layer comprising the antifungal agent, and an antifungal coating material comprising the antifungal agent.

### BACKGROUND

Exterior walls, interior walls, building materials, air filters, packings, and tanks or pipes for storing or transporting water are exposed to water due to condensation or running water, and thus fungal contamination progresses. In response thereto, there has been a demand for products having an antifungal property in order to prevent fungal occurrence and contamination.

Phenol-based, organotin-based, triazine-based, sulfonylpyridine halide-based, captan-based, organocopper-based, chloronaphthalene-based, and chlorophenylpyridazine-based compounds are known as chemical agents that exhibit an antifungal effect (refer to PTL 1).

Silver ions, copper ions, and zinc ions are known as ions that exhibit an antifungal effect. Toxicity of the metal ions is utilized by supporting, for example, a metal powder of silver, copper, or zinc, or an alloy or a compound thereof on a carrier and allowing a trace amount of metal ions to elute. PTL 2 discloses a dispersion liquid having deodorant, antibacterial, and antifungal properties, in which a carboxylate metal salt formed from a carboxyl group-containing polymer and a metal compound is dispersed.

### [CITATION LIST]

### [PATENT LITERATURE]

[PTL 1] Japanese Unexamined Patent Publication (Kokai) No. 63-17249
[PTL 2] Japanese Unexamined Patent Publication (Kokai) No. 2-288804
[PTL 3] Japanese Unexamined Patent Publication (Kokai) No. 2005-272320

### SUMMARY

### [TECHNICAL PROBLEM]

Recently, antifungal agents in the form of chemical agents and antifungal agents utilizing the toxicity of metal ions have sometimes been viewed as problematic in terms of environmental contamination and safety.

In recent years, ferrite compounds have been proposed as anti-algae agents having a low degree of environmental contamination and excellent safety. For example, PTL 3 discloses an anti-algae additive mainly composed of an orthoferrite comprising a rare earth element selected from lanthanum (La), praseodymium (Pr), neodymium (Nd), and yttrium (Y); iron; and oxygen, an anti-algae coating material using the same, and an anti-algae product in which the coating material is applied on a substrate surface.

PTL 3 describes that presumably an anti-algae effect is associated with magnetic properties of the material, and thus orthoferrites of a rare earth oxide to Fe₂O₃ = 1:1 (molar ratio), which exhibit a small coercive force and a magnetic force close to intrinsic magnetic fields of plants, are most preferable as anti-algae additives. It should be noted that the antifungal effect of orthoferrites has not been examined in PTL 3.

In view of the above background, an object of the present invention is to provide an antifungal agent having a low degree of environmental contamination and excellent safety, an antifungal product comprising an antifungal layer comprising the antifungal agent, and an antifungal coating material comprising the antifungal agent.

### [SOLUTION TO PROBLEM]

The present inventors have undergone intensive studies to achieve the above object. The present inventors have discovered that a rare earth ferrite having a specific composition can be used as an antifungal agent having a low degree of environmental contamination and excellent safety, and have completed the present invention. Specifically, the present invention is as follows.

### «Aspect 1»

An antifungal agent, represented by a formula (1) below:

Ln₂ₓFe₂₍₁₋ₓ₎O₃ (1)

where in the formula (1), Ln is a rare earth element selected from the group consisting of lanthanum, praseodymium, neodymium, and yttrium; and x is a number of 0.45 or greater and less than 1.00.

### «Aspect 2»

The antifungal agent according to Aspect 1, where in the formula (1), x is a number of 0.65 or greater and 0.85 or less.

### «Aspect 3»

The antifungal agent according to Aspect 1 or 2, where in the formula (1), Ln is lanthanum.

### «Aspect 4»

An antifungal product, comprising a substrate and an antifungal layer, wherein
the antifungal layer is a layer comprising the antifungal agent according to any one of Aspects 1 to 3.

### «Aspect 5»

The antifungal product according to Aspect 4, wherein the antifungal layer further comprises a resin.

### «Aspect 6»

The antifungal product according to Aspect 4 or 5, which is selected from the group consisting of an exterior wall, an interior wall, a building material, an air filter, a packing, and a tank or pipe for storing or transporting water.

### «Aspect 7»

An antifungal coating material, comprising the antifungal agent according to any one of Aspects 1 to 3.

### «Aspect 8»

The antifungal coating material according to Aspect 7, further comprising a resin and a solvent.

### [ADVANTAGEOUS EFFECTS OF INVENTION]

According to the present invention, an antifungal agent having a low degree of environmental contamination and excellent safety is provided.

The antifungal agent of the present invention also exhibits an antifungal effect on the surroundings thereof. Specifically, the antifungal effect can spread to parts not in direct contact with the antifungal agent of the present invention. Thus, when preparing an antifungal product using the antifungal agent of the present invention, even if the antifungal agent is not present in the entirety of an article of the product, an antifungal effect can be exhibited.

The antifungal agent of the present invention has excellent dispersibility in water and organic solvents. Thus, dispersants and coating materials dispersed in various media can be prepared. Therefore, by applying a coating material comprising the antifungal agent of the present invention on an article acting as a substrate to form a layer comprising the antifungal agent, an antifungal effect can be imparted on materials on which an antifungal agent could not be applied and locations having complex shapes.

### DESCRIPTION OF EMBODIMENTS

### <<Antifungal agent>>

The antifungal agent of the present invention is a rare earth ferrite compound having a specific composition, represented by the following formula (1):

Ln₂ₓFe₂₍₁₋ₓ₎O₃ (1)

where in the formula (1), Ln is a rare earth element selected from the group consisting of lanthanum, praseodymium, neodymium, and yttrium; and x is a number of 0.45 or greater and less than 1.00.

The present inventors have examined compositions of rare earth ferrites and the antifungal effect thereof in detail. As a result, the present inventors have discovered that a high antifungal effect can be obtained by setting the rare earth (Ln)-to-Fe ratio in the rare earth ferrite to the above range.

The antifungal agent of the present invention may be in any form as long as x in the above formula (1) is a number of 0.45 or greater and less than 1.00. For example, a solid solution having a uniform composition as a whole may be formed, a mixture of an LnFeO₃ phase and an Ln₂O₃ phase may be formed, or a mixture of a solid solution having a uniform solution, an LnFeO₃ phase, and an Ln₂O₃ phase may be formed. Other phases may also be included.

The x in the formula (1) may be 0.50 or greater, 0.55 or greater, 0.60 or greater, 0.65 or greater, 0.70 or greater, or 0.75 or greater, and may be 0.90 or less, 0.85 or less, 0.80 or less, 0.75 or less, 0.70 or less, 0.65 or less, or 0.60 or less.

Typically, for example, the x in the formula (1) may be a number of 0.50 or greater and 0.90 or less, may further be 0.65 or greater and 0.85 or less, and may particularly be a number of 0.70 or greater and 0.80 or less.

From the viewpoints of antifungal property and cost, the rare earth (Ln) in the formula (1) may particularly be lanthanum. Therefore, the antifungal agent of the present invention may be lanthanum ferrite.

### <Production method for antifungal agent>

The production method for the antifungal agent of the present invention is not particularly limited. For example, the antifungal agent may be produced by applying an appropriate stress to a mixture containing a rare earth source and an iron source in a predetermined ratio and pulverizing, mixing, and then firing the mixture. The applied stress may be, for example, frictional force, shear force, shear stress, or impact force. Examples of a method of applying such stress to the mixture of a rare earth source and an iron source include a method of wet pulverization in a ball mill.

As the rare earth source, for example, oxides of desired rare earth elements may be used, and bastnasite, monazite, and xenotime may be used.

As the rare earth element, it is preferable to use lanthanum from the viewpoints of excellent antifungal property and cost of the resulting rare earth ferrite. In particular, when La₂O₃ is used as the lanthanum source, a highly effective and relatively low-cost lanthanum ferrite can be produced.

As the iron source, oxides such as FeO, Fe₃O₄, and Fe₂O₃; oxy oxides such as FeOOH, ferrihydrite, and schwertmannite; and hydroxides such as Fe(OH)₂ and Fe(OH)₃ may be used.

Of the above, if FeOOH is used as the iron source, since the reactivity thereof is higher than Fe₂O₃, firing at a low temperature is possible, and an antifungal agent having a smaller particle size can be produced than when Fe₂O₃ is used as the iron source.

When the mixture of a rare earth source and an iron source is pulverized and mixed by wet pulverization, for example, water or alcohol may be used as a liquid medium. After the mixture of a rare earth source and an iron source is pulverized and mixed, if necessary, the liquid medium may be removed by an appropriate method such as heat drying, followed by firing.

The firing temperature is not particularly limited and can be appropriately set. Firing may be carried out at a temperature of, for example, 700°C or higher, 800°C or higher, 900°C or higher, or 1,000°C or higher and, for example, 1,300°C or lower, 1,200°C or lower, 1,100°C or lower, or 1,000°C or lower.

The firing time is also not particularly limited and can be appropriately set. For example, firing may be carried out for a time of 1 h or more, 2 h or more, 3 h or more, 4 h or more, 6 h or more, 8 h or more, 12 h or more, or 15 h or more and 72 h or less, 48 h or less, 36 h or less, 24 h or less, 18 h or less, or 15 h or less.

The ambient atmosphere during firing may be an oxidizing atmosphere, for example, firing in air.

After firing, the antifungal agent of the present invention can be obtained by pulverizing or classifying by an appropriate method, if necessary.

### <Use amount of antifungal agent>

The use form of the antifungal agent of the present invention is not particularly limited, and the antifungal agent can be used in, for example, a powder form, an impregnated form, or a coating film form.

When the use form of the antifungal agent is in a powder form, it is preferable that 1 g or more of the antifungal agent be used in order to sufficiently exhibit an antifungal effect.

When the use form of the antifungal agent is in an impregnated form, it is preferable that, for example, 0.01 to 0.5 g of the antifungal agent be impregnated in 0.06 g of paper.

When the use form of the antifungal agent is in a coating film form and used as a coating material comprising the antifungal agent, it is preferable that, for example, 30% by mass or greater of the antifungal agent be contained in total solid content of the coating material.

### <<Antifungal product>>

Another aspect of the present invention is an antifungal product comprising an antifungal layer comprising the antifungal agent of the present invention. Specifically, the antifungal product comprises a substrate and an antifungal layer, wherein the antifungal layer is a layer comprising the antifungal agent of the present invention.

### <Substrate>

The substrate in the antifungal product of the present invention may be any article to be imparted with an antifungal property. The substrate may be any article composed of any material and having any shape, wherein an antifungal property is required.

### <Antifungal layer>

The antifungal layer in the antifungal product of the present invention is not particularly limited as long as the layer comprises the antifungal agent of the present invention. For example, the antifungal layer may be a layer prepared by blending a powder of the antifungal agent of the present invention with a resin and then carrying out extrusion coating, or may be a cured product of the antifungal coating material of the present invention described below.

The antifungal layer may comprise optional components in addition to the antifungal agent of the present invention. The optional components are not particularly limited. Examples thereof include resins, binders, or additives for exhibiting a non-antifungal function.

The resin optionally contained in the antifungal layer of the antifungal product of the present invention is not particularly limited and may be, for example, an acrylic resin, an acrylic-silicone resin, a silicone resin, an amino-alkyd resin, an epoxy resin, a phenolic resin, a polyurethane resin, an unsaturated polyester resin, or a fluororesin.

The thickness of the antifungal layer is not particularly limited and may be, for example, about 1 µm or more and 1 mm or less.

When the antifungal layer is prepared with an antifungal coating material, the application amount thereof as dry mass after solvent removal per unit area may be, for example, 5 g/m² or more, 10 g/m² or more, 15 g/m² or more, 20 g/m² or more, or 25 g/m² or more and may be, for example, 200 g/m² or less, 150 g/m² or less, 120 g/m² or less, 100 g/m² or less, 80 g/m² or less, or 70 g/m² or less.

### <Additional features>

The antifungal product of the present invention preferably comprises a substrate and an antifungal layer as indispensable features, and may include additional features. Examples of the additional feature include an additional layer. The additional layer may be on the outside of the substrate, between the substrate and the antifungal layer, or on the outside of the antifungal layer.

Examples of the additional layer include a primer layer formed on the substrate. By forming the antifungal layer on a primer layer, adhesion can be improved.

The deterioration of the antifungal effect due to loss or leakage of the antifungal agent from long-term use may be suppressed by laminating and covering the outside of the antifungal layer with a resin.

A hue pigment layer may be laminated on the outside of the antifungal layer to increase the degree of freedom in color design of the antifungal product. Other functional layers may be laminated thereon or combined therewith to provide a non-antifungal performance.

### <Application>

The antifungal product of the present invention is not particularly limited and may be, for example, an exterior wall, an interior wall, a building material, an air filter, a packing, or a tank or pipe for storing or transporting water.

### <<Antifungal coating material»

Another aspect of the present invention is an antifungal coating material comprising the antifungal agent of the present invention. The antifungal coating material may comprise additional components such as resins and solvents, in addition to the antifungal agent of the present invention.

### <Resin>

The resin optionally contained in the antifungal coating material of the present invention is not particularly limited and may be, for example, an acrylic resin, an acrylic-silicone resin, a silicone resin, an amino-alkyd resin, an epoxy resin, a phenolic resin, a urethane resin, an unsaturated polyester resin, or a fluororesin.

### <Solvent>

The solvent contained in the antifungal coating material of the present invention is not particularly limited and may be selected from, for example, water, alcohols, ketones, aliphatic hydrocarbons, aromatic hydrocarbons, and esters.

### <Content of antifungal agent>

The content of the antifungal agent in the antifungal coating material of the present invention as a ratio of the antifungal agent to a total of the resin and the antifungal agent in the coating material may be, for example, 1% by mass or greater, preferably 2% by mass or greater, more preferably 5% by mass or greater, even more preferably 10% by mass or greater, particularly preferably 20% by mass or greater, and especially preferably 30% by mass or greater from the viewpoint of exhibiting a high antifungal performance, and may be, for example, 80% by mass or less, preferably 70% by mass or less, more preferably 60% by mass or less, even more preferably 50% by mass or less, particularly preferably 40% by mass or less, and especially preferably 30% by mass or less or 20% by mass or less from the viewpoint of obtaining satisfactory applicability.

### <Production method for antifungal coating material>

The production method for the antifungal coating material of the present invention is not particularly limited. For example, the antifungal coating material may be prepared by mixing a commercially available synthetic resin coating material with the antifungal agent of the present invention at a predetermined ratio.

### <Application>

The antifungal coating material of the present invention can be used to form the antifungal layer in the antifungal product of the present invention. Further, the antifungal coating material may be used as, for example, a joint material (a filler for gaps in tiles, concrete, and bricks), a sealing material, a caulking material, or an adhesive.

### EXAMPLES

### «Example 1»

### <Synthesis of lanthanum ferrite>

0.4 molar parts of La₂O₃, 0.2 molar parts of FeOOH, and water were charged in a ball mill with 10 mm Φ alumina balls as the pulverizing media and pulverized and mixed for 5 h. The resulting pulverized material was dried at 300°C for 15 h and then crushed with a rotary pulverizer. The resulting crushed material was fired at 1,000°C for 15 h and then pulverized with a hammer mill, whereby lanthanum ferrite (formula: La_{1.6}Fe_{0.4}O₃) of La:Fe = 80:20 (molar ratio) was obtained.

### <Evaluation>

### (Evaluation of antifungal effect in powder form)

A test simulating the test for fungus resistance of JIS Z2911:2018 was carried out to evaluate the antifungal effect in a powder form. Specifically, 1 g of the lanthanum ferrite powder obtained above was placed on an agar medium in a sterilized petri dish, and 200 µL of a 0.01% by mass fungal suspension was dropped onto the powder and spread uniformly on and around the powder. The petri dish covered with a lid was stored in a room temperature environment, and after a predetermined period of time had elapsed, the state of fungal growth was evaluated by visual observation.

The agar medium was prepared by heating and dissolving 10 g of high-quality agar for culture (BA-70, manufactured by Ina Food Industry Co., Ltd.) and 30 g of granulated sugar in 1000 mL of purified water, pouring the solution into a sterilized petri dish, and allowing the solution to solidify at room temperature.

The 0.01% by mass fungal suspension used to evaluate the antifungal effect in a powder form was prepared by storing commercially available wood in a humid environment to allow fungi to naturally grow, collecting 0.001 g of the grown fungi, and stirring and mixing the grown fungi with 10 mL of purified water.

The states of fungal growth after 10 days and after 45 days were evaluated by visual observation for the antifungal effect in a powder form, according to the following evaluation criteria. The evaluation results are shown in Table 1.

AA: Almost no fungal occurrence was observed on culture medium.
A: Fungal occurrence was observed on culture medium, but inhibition zone was 1 cm or more in width.
B: Fungal occurrence was observed on culture medium, and inhibition zone was 1 cm or less.
C: Fungal occurrence was observed on culture medium, and there was no inhibition zone.

### «Examples 2 to 4 and Comparative Example 2»

Except that the component ratios indicated in Table 1 were used, lanthanum ferrites were synthesized in the same manner as in Example 1. The resulting lanthanum ferrites were evaluated for an antifungal effect in the same manner as in Example 1. The evaluation results are shown in Table 1.

### <<Comparative Example 1>>

Except that the 0.01% by mass fungal suspension was scattered on an agar medium without placing lanthanum ferrite, the antifungal effect was evaluated in the same manner as in Example 1. The evaluation results are shown in Table 1.

**[Table 1]**

| **Table 1** | | | | |
|---|---|---|---|---|
| | La:Fe (molar ratio) | Firing temperature (°C) | Antifungal effect | |
| | | | After 10 days | After 45 days |
| Example 1 | 80:20 | 1000 | AA | AA |
| Example 2 | 70:30 | 1000 | AA | AA |
| Example 3 | 60:40 | 1000 | AA | AA |
| Example 4 | 50:50 | 1000 | B | B |
| Comparative Example 1 | - | - | C | C |
| Comparative Example 2 | 40:60 | 1000 | C | C |

From Examples 1 to 4 and Comparative Example 2, it was found that an antifungal agent (lanthanum ferrite) having a high molar ratio of La tends to have a high antifungal effect. It should be noted that the lanthanum ferrite in Comparative Example 2, which had a high molar ratio of Fe, did not exhibit an antifungal effect. Thus, it was found that an antifungal effect is not exhibited unless La and Fe are at an appropriate component ratio.

In Examples 1 to 3, which had a molar ratio of La of 60% or greater, an inhibition zone of 1 cm or more in width could be verified, and the presence of a sufficient antifungal effect could be verified even in parts not in direct contact with lanthanum ferrite.

### «Examples 5 to 8 and Comparative Example 5»

In the same manner as in Example 1, lanthanum ferrites having the component ratios indicated in Table 2 were synthesized.

### <Evaluation>

### (Evaluation of antifungal effect in impregnated form)

A test simulating the test for fungus resistance of JIS Z2911:2018 was carried out to evaluate the antifungal effect in an impregnated form. Specifically, filter paper soaked with pure water was laid on a sterilized petri dish, and a 0.01% by mass fungal suspension-sugar solution was applied by spraying on the lower half of an evaluation sample, which was then placed on the filter paper. The petri dish covered with a lid was stored in a room temperature environment, and after a predetermined period of time had elapsed, the state of fungal growth was evaluation by visual observation.

The evaluation sample was prepared by impregnating 0.06 g of paper with the obtained lanthanum ferrite in a use amount indicated in Table 2.

The 0.01% by mass fungal suspension-sugar solution used in the evaluation of the antifungal effect in an impregnated form was prepared by leaving commercially available bread in a humid environment to allow fungi to naturally grow, collecting 0.001 g of the grown fungi, and stirring and mixing the grown fungi with 10 mL of a 3% granulated sugar aqueous solution.

The states of fungal growth after 10 days and after 45 days were evaluated by visual observation for the antifungal effect in an impregnated form, according to the same evaluation criteria as for the above antifungal effect in a powder form. The evaluation results are shown in Table 2.

### <<Comparative Example 3»

Except that the 0.01% by mass fungal suspension-sugar solution was scattered on a filter paper only without placing an evaluation sample impregnated with lanthanum ferrite, the antifungal effect was evaluated in the same manner as in Example 5. The evaluation results are shown in Table 2.

### <<Comparative Example 4»

Except that lanthanum oxide (La₂O₃), which is a lanthanum ferrite raw material, that was fired was used, the antifungal effect was evaluated in the same manner as in Example 5. The evaluation results are shown in Table 2.

**[Table 2]**

| **Table 2** | | | | | | |
|---|---|---|---|---|---|---|
| | La:Fe (molar ratio) | Firing temperature (°C) | Antifungal effect | | | |
| | | | Material impregnation amount: 0.01 to 0.03 g | | Material impregnation amount: 0.2 to 0.5 g | |
| | | | After 10 days | After 45 days | After 10 days | After 45 days |
| Example 5 | 80:20 | 1000 | AA | AA | AA | AA |
| Example 6 | 70:30 | 1000 | AA | AA | AA | AA |
| Example 7 | 60:40 | 1000 | A | A | A | A |
| Example 8 | 50:50 | 1000 | B | B | B | B |
| Comparative Example 3 | - | - | - | - | C | C |
| Comparative Example 4 | 100:0 | 1000 | B | C | B | B |
| Comparative Example 5 | 40:60 | 1000 | C | C | C | C |

From Examples 5 to 8 and Comparative Example 5, it was found that an antifungal agent (lanthanum ferrite) having a high molar ratio of La tends to have a high antifungal effect.

The antifungal agents (lanthanum ferrite) of Examples 5 to 8 tended to have a higher antifungal effect than Comparative Example 4, which used a lanthanum ferrite raw material that was fired.

The antifungal effect of Comparative Example 4, which used a lanthanum ferrite raw material that was fired, dissipated over time. Thus, when the antifungal agent (lanthanum ferrite) is used in an impregnated form, even with use of a small amount, the longevity of the antifungal effect is presumably high.

### «Examples 9 to 20»

In the same manner as in Example 1, lanthanum ferrites having the component ratios indicated in Table 3 were synthesized.

### <Evaluation>

### (Evaluation of antifungal effect in coating film form)

An evaluation coating material was prepared by mixing the obtained lanthanum ferrite with a commercially available water-based acrylic coating material at a concentration described in Table 3. The prepared evaluation coating material was applied to wood (MDF) with a roller and dried at room temperature for 1 day to form a coating film. For the formed coating film, filter paper soaked with pure water was laid on a sterilized petri dish, and a 0.01% by mass fungal suspension-sugar solution prepared in the same manner as above was applied by spraying on the evaluation sample, which was then placed on the filter paper. The petri dish covered with a lid was stored in a room temperature environment, and after a predetermined period of time had elapsed, the state of fungal growth was evaluated by visual observation.

The states of fungal growth after 7 days and after 21 days were evaluated by visual observation for the antifungal effect in a coating film form, according to the following evaluation criteria. The evaluation results are shown in Table 3.

AA: No fungal occurrence was observed on evaluation sample.
A: Area of fungal occurrence on evaluation sample was less than 10%.
B: Area of fungal occurrence on evaluation sample was 10% or greater and less than 40%.
C: Area of fungal occurrence on evaluation sample was 40% or greater.

### <<Comparative Example 6»

Using a commercially available water-based acrylic coating material without mixing in lanthanum ferrite, a coating film was formed in the same manner as in Example 9. The resulting coating film was evaluated for an antifungal effect in the same manner in Example 9. The evaluation results are shown in Table 3.

**[Table 3]**

| **Table 3** | | | | | |
|---|---|---|---|---|---|
| | La:Fe (molar ratio) | Firing temperature (°C) | Concentration (% by mass) | Antifungal effect | |
| | | | | After 7 days | After 21 days |
| Comparative Example 6 | - | - | 0 | C | C |
| Example 9 | 80:20 | 1000 | 30 | AA | B |
| Example 10 | 70:30 | 1000 | | AA | B |
| Example 11 | 60:40 | 1000 | | AA | B |
| Example 12 | 80:20 | 1000 | 50 | AA | AA |
| Example 13 | 70:30 | 1000 | | AA | AA |
| Example 14 | 60:40 | 1000 | | AA | B |
| Example 15 | 80:20 | 1000 | 65 | AA | AA |
| Example 16 | 70:30 | 1000 | | AA | AA |
| Example 17 | 60:40 | 1000 | | AA | A |
| Example 18 | 80:20 | 1000 | 80 | AA | AA |
| Example 19 | 70:30 | 1000 | | AA | AA |
| Example 20 | 60:40 | 1000 | | AA | A |

From Examples 9 to 20, the antifungal effect in a coating film form, in which the antifungal agent (lanthanum ferrite) was mixed with a resin, was verified. Further, from Examples 9 to 20, it was found that an antifungal agent (lanthanum ferrite) having a high molar ratio of La tends to have a high antifungal effect.

It was found that the concentration of the lanthanum ferrite material mixed in the coating material is preferably 30% by mass or greater and more preferably 50% by mass or greater.

## Claims

1. An antifungal agent, represented by a formula (1) below:
Ln₂ₓFe₂₍₁₋ₓ₎O₃ (1)
where in the formula (1), Ln is a rare earth element selected from the group consisting of lanthanum, praseodymium, neodymium, and yttrium; and x is a number of 0.45 or greater and less than 1.00.

2. The antifungal agent according to claim 1, where in the formula (1), x is a number of 0.65 or greater and 0.85 or less.

3. The antifungal agent according to claim 1 or 2, where in the formula (1), Ln is lanthanum.

4. An antifungal product, comprising a substrate and an antifungal layer, wherein
the antifungal layer is a layer comprising the antifungal agent according to any one of claims 1 to 3.

5. The antifungal product according to claim 4, wherein the antifungal layer further comprises a resin.

6. The antifungal product according to claim 4 or 5, which is selected from the group consisting of an exterior wall, an interior wall, a building material, an air filter, a packing, and a tank or pipe for storing or transporting water.

7. An antifungal coating material, comprising the antifungal agent according to any one of claims 1 to 3.

8. The antifungal coating material according to claim 7, further comprising a resin and a solvent.
